Europäisches Patentamt

European Patent Office

Office européen des brevets

(19)

(11) Veröffentlichungsnummer: **0 216 992**
**B1**

# EUROPÄISCHE PATENTSCHRIFT

(45) Veröffentlichungstag der Patentschrift:
14.06.89

(51) Int. Cl.⁴: **F16K 47/02, F16K 47/08**

(21) Anmeldenummer: 86106868.2

(22) Anmeldetag: 21.05.86

(54) **Geräuscharmes Stellventil.**

(30) Priorität: 07.06.85 DE 3520555

(43) Veröffentlichungstag der Anmeldung
08.04.87 Patentblatt 87/15

(45) Bekanntmachung des Hinweises auf die Patenterteilung:
14.06.89 Patentblatt 89/24

(84) Benannte Vertragsstaaten:
DE FR GB IT

(56) Entgegenhaltungen:
CH-A- 398 503
DE-A- 2 448 295
DE-A- 2 728 648
DE-C- 2 205 371
US-A- 4 007 908
US-A- 4 402 485

(73) Patentinhaber: HP + HP Chemie-Stellglieder GmbH,
Kleinkollenburgstrasse 78-80,
D-4156 Willich 2-Anrath(DE)

(72) Erfinder: Paetzel, Herbert, Ansemsstrasse 54,
D-4054 Nettetal(DE)

(74) Vertreter: Feder, Heinz. Dr. et al, Dominikanerstrasse 37,
D-4000 Düsseldorf 11(DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentubereinkommen).

## Beschreibung

Die Erfindung betrifft ein geräuscharmes Stellventil mit einem Gehäuse, in dem ein gegenüber einem Ventilsitz bewegbarer, den Durchtrittsweg des Mediums sperrender oder öffnender Ventilkegel angeordnet ist und das einen Zuflußstutzen und einen Abflußstutzen besitzt und bei dem innerhalb des Gehäuses im Durchtrittsweg des Mediums ein geräuschdämpfendes Element angeordnet ist, wobei innerhalb dieses Elementes der Durchtrittsweg des Mediums in eine Vielzahl von Teilwegen aufgeteilt ist und die Durchtrittsquerschnitte der Teilwege klein gegenüber dem Durchtrittsquerschnitt des Ventils sind.

Derartige geräuscharme Stellventile sind an sich bekannt (z.B. aus der DE-A 2 448 295).

Als geräuschdämpfende Elemente dienen beispielsweise im Durchtrittsweg angeordnete Lochkäfige oder im Zufluß oder Abfluß angeordnete Widerstandspakete.

Die bekannten geräuschdämpfenden Elemente benötigen, wenn mit ihnen eine ausreichende Schallpegelsenkung von etwa 20 dB(A) erreicht werden soll, relativ viel Einbauraum und aufwendige Konstruktionen.

Die der Erfindung zugrunde liegende Aufgabe bestand darin, ein geräuscharmes Stellventil der eingangs erwähnten Bauart zu schaffen, bei dem geräuschdämpfende Element bei guter Wirksamkeit reativ wenig Platz be nötigt. Weiterhin sollte erreicht werden, daß neben der Geräuschminderung eine Verschiebung des Kavitationsanfangs erreicht wird und daß die Anströmrichtung des Ventils nicht vorgeschrieben ist. Schließlich sollte es möglich sein, trotz des Vorhandenseins eines geräuschdämpfenden Elementes bestimmte, beispielsweise lineare Kennlinien des Ventils zu erreichen.

Die Lösung dieser Aufgabe geschieht mit den Merkmalen aus dem kennzeichnenden Teil des Patentanspruchs 1. Vorteilhafte Ausführungsformen des erfindundsgemäßen Stellventils sind in den Unteransprüchen beschrieben.

Der Grundgedanke der Erfindung besteht darin, als geräuschdämpfendes Element ein Einbauelement zu verwenden, das an sich bekannt ist, aber bisher für völlig andere technische Zwecke eingesetzt wurde. Ein solches Einbauelement ist beispielsweise in der CH-A 398 503 beschrieben. Das dort beschriebene Einbauelement wird in Stoffaustauschkolonnen, z.B. Rektifikationskolonnen, Kühltürmen oder Luftbefeuchtern verwendet, in welchen ein Gas oder eine Flüssigkeit im Gegenstrom geführt und in Kontakt gebracht werden.

Weiterhin ist es auch bekanntgeworden (DE-C 2 205 371) ein derartiges Einbauelement als statischen Mischer für im Gleichstrom fließende Medien zu verwenden.

Es hat sich nun herausgestellt, daß dieses Einbauelement in hervorragender Weise als geräuschdämpfendes Element in einem Stellventil verwendet werden kann. Es werden bei kleinem Einbauraum hervorragende Werte für die Schallpegelsenkung erreicht. Außerdem hat sich gezeigt, daß die Anwendungsmöglichkeiten dieses Einbauelementes innerhalb des Stellventils sehr vielfältig sind. So kann das in der erfindungsgemäßen Weise verwendete Einbauelement im Zufluß, im Abfluß oder auch unmittelbar im oder am Ventilkegel oder im oder am Ventilsitz angeordnet sein. Wie weiter unten näher ausgeführt, eröffnet der kleine Einbauraum, den dieses Einbauelement benötigt, die Möglichkeit, herkömmliche Ventile mit einem geräuschdämpfenden Element nachzurüsten.

Die starke Verschiebung des Kavitationsanfangs bei Verwendung des erfindungsgemäßen Einbauelementes macht es möglich, mit höheren Differenzdrücken zu arbeiten.

Das geräuschdämpfende Element nach der Erfindung kann aus allen formbaren Werkstoffen also beispielsweise einerseits aus Metall und andererseits aus Kunststoff, hergestellt sein.

Es kann bei sehr unterschiedlichen Ventilkonstruktionen, also einerseits bei Hubventilen und andererseits bei Drehkegelventilen verwendet werden.

Es kann weiterhin so angeordnet sein, daß die Durchströmrichtung des Ventils nicht vorgeschrieben ist.

Wie weiter unten anhand von Ausführungsbeispielen näher erläutert, ist es möglich, auch bei Verwendung des erfindungsgemäßen Einbauelementes bestimmte Kennlinienformen eines Ventils zu erhalten.

Bei einer besonders vorteilhaften, weiter unten näher erläuterten Ausführungsform an einem Hubventil ist das Einbauelement im Ventilkegel angeordnet. Bei dieser Ausführungsform ist in besonderer Weise die Umrüstbarkeit eines herkömmlichen Ventils bei Erhaltung seiner beispielsweise linearen Kennlinie möglich.

Bei einer anderen vorteilhaften Ausführungsform an einem Drehkegelventil ist es möglich, das erfindungsgemäße Einbauelement selbst als Ventilsitz auszubilden, wodurch ein besonders günstiger geräuschdämpfender Effekt erreicht wird.

Im folgenden werden anhand der beigefügten Zeichnungen Ausführungsbeispiele für des Stellventil nach der Erfindung näher erläutert.

In den Zeichnungen zeigen:

Fig. 1 im Längsschnitt ein Hubventil mit einem geräuschdämpfenden Element;

Fig. 2 in perspektivischer vergrößerter Darstellung den Ventilkegel mit geräuschdämpfendem Element am Hubventil nach Fig. 1;

Fig. 3 in explodierter perspektivischer Teildarstellung Einzelheiten des geräuschdämpfenden Elementes am Hubventil nach Fig. 1 und 2;

Fig. 4 in zusammengesetzter perspektivischer Teildarstellung die Einzelheiten nach Fig. 3;

Fig. 5 im Längsschnitt ein Drehkegelventil mit geräuschdämpfendem Element.

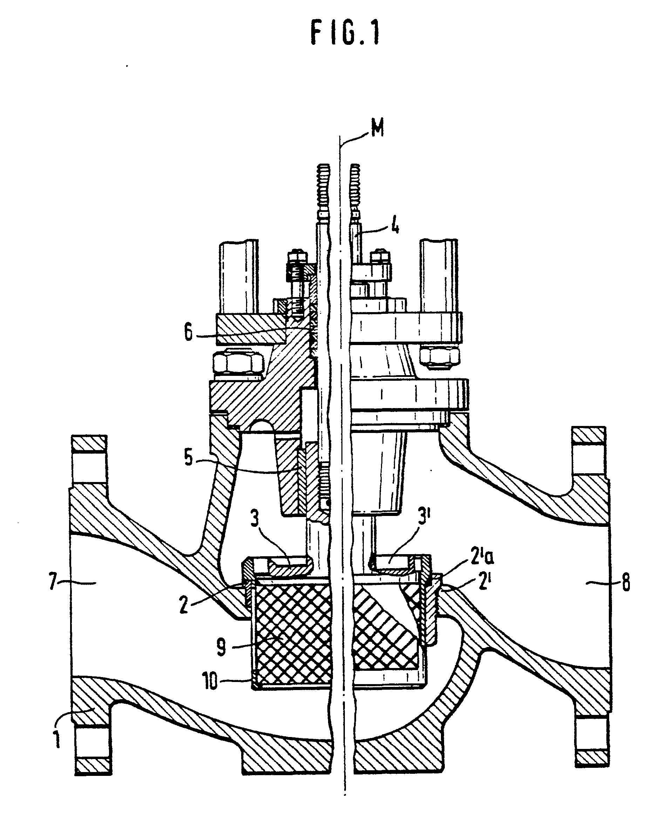

In Fig. 1 ist ein Hubventil bekannter Bauart dargestellt, wobei rechts und links der Mittelachse M der Ventilspindel 4 im Bezug auf die Ausbildung von Ventilkegel und Ventilsitz leicht unterschiedliche Ausführungsformen dargestellt sind.

Das in Fig. 1 dargestellte Ventil besitzt ein Ventilgehäuse 1 mit einem Zuflußstutzen 7 und einem Abflußstutzen 8. Im Inneren des Ventilgeshäuses ist ein Ventilsitz 2 bzw. 2' angeordnet, dem ein am inneren Ende der Ventilspindel 4 angeordneter Ventilkegel 3 bzw. 3' gegenüberliegt. Durch Anheben oder Absenken der über Durchführungen 5 und 6 in das Gehäuse hineingeführten Ventilspindel 4 wird der Ventilkegel 3 bzw. 3' vom Ventilsitz 2 bzw. 2' mit Einsatzstück 2'a abgehoben oder auf ihn aufgesetzt, wodurch die Öffnung oder Schließung des Ventils bewirkt wird.

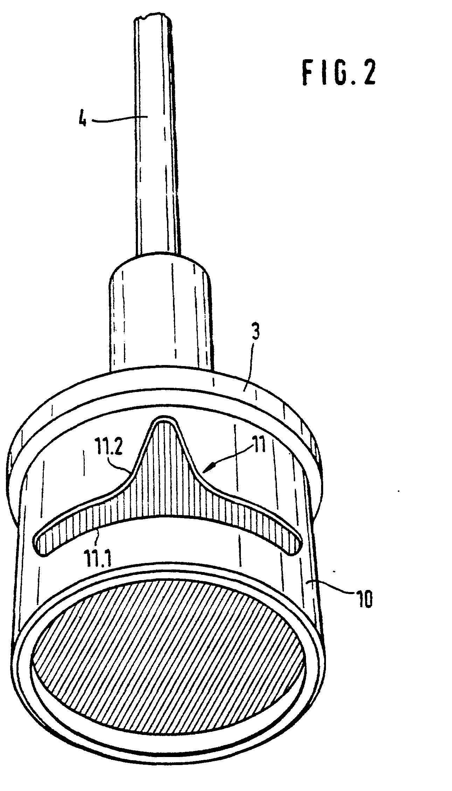

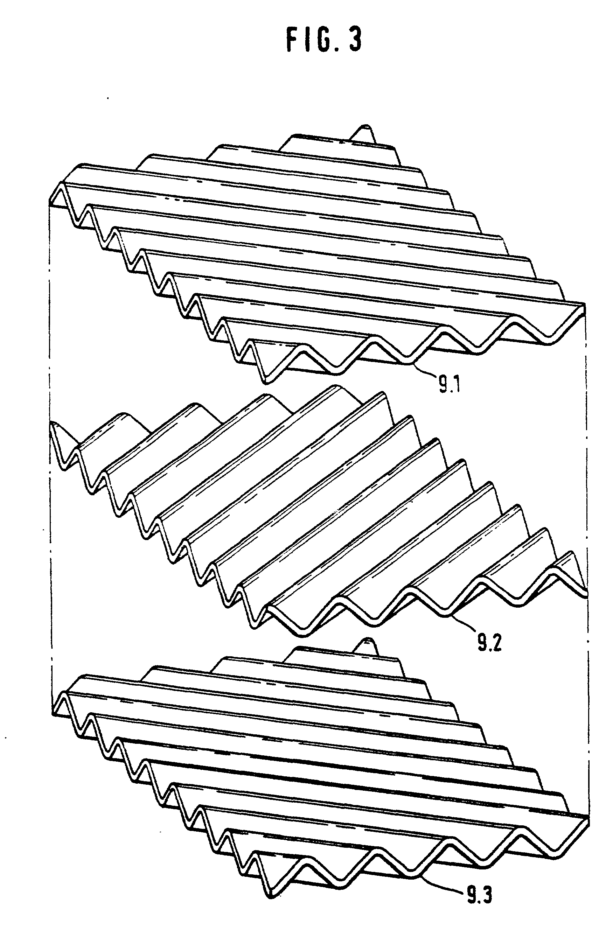

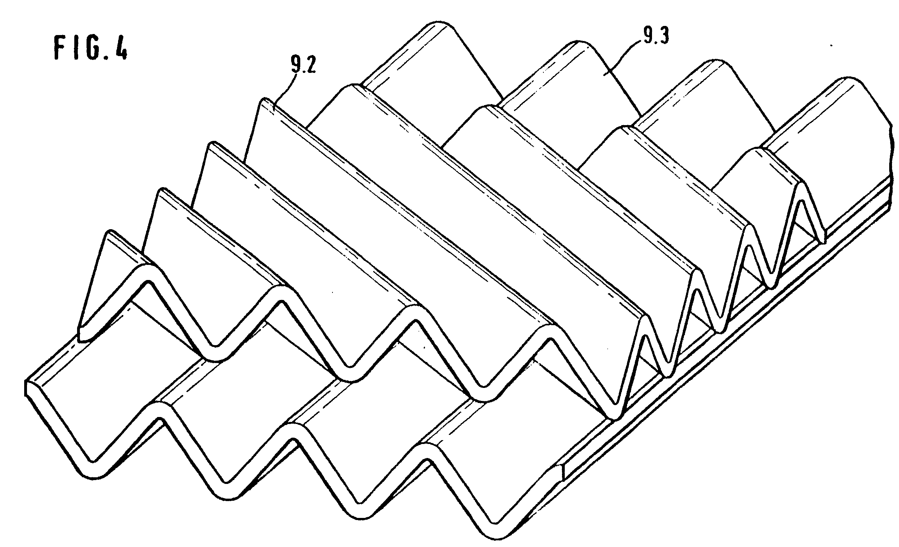

An der dem Ventilsitz 2 zugewandten Seite des Ventilkegels 3 ist, wie genauer aus Fig. 2 zu entnehmen, ein sich in Schließrichtung erstreckender, durch den Ventilsitz 2 bzw. 2' dichtend hindurchgeführter, nach unten offener Ansatz 10 angeordnet, in dem ein Einbauelement 9 angeordnet ist, das in Fig. 1 und 2 nur schematisch angedeutet ist und im folgenden anhand der Fig. 3 und 4 näher erläutert wird.

Das Einbauelement 9 ist aus einzelnen, parallel zueinander und parallel zur Achse des Ansatzes 10 stehenden, einander berührenden Lamellen aufgebaut, von denen in Fig. 3 drei Lamellen 9.1, 9.2 und 9.3 explodiert dargestellt sind. Die Lamellen weisen eine gradlinige Riffelung auf und sind so angeordnet, daß die Richtungen der Riffelungen schräg zur Achse des Ansatzes 10 verlaufen. Es ist auch möglich, Lamellen mit einer gekrümmt verlaufenden Riffelung zu verwenden. Wie besonders gut aus Fig. 4 zu entnehmen, sind die Lamellen weiterhin so angeordnet, daß sich die Richtungen der Riffelungen von je zwei benachbarten Lamellen, also beispielsweise den Lamellen 9.2 und 9.3, schneiden.

Es entsteht auf diese Weise ein aus einer Vielzahl von Lamellen aufgebautes Einbauelement, das von einer Vielzahl von sich immer wieder verzweigenden und miteinander verbindenden Strömungskanälen durchsetzt ist. Wenn, wie bei dem in Fig. 1 und 2 dargestellten Ausführungsbeispiel das Einbauelement zylindrische Form besitzen soll, sind die Lamellen so ausgebildet, daß bei den aufeinanderfolgenden Lamellen die Breite von außen nach innen zunimmt. Es entsteht somit ein zylindrischer Block, der im Ansatz 10 so eingesetzt ist, daß die Lamellen selbst parallel zur Zylinderachse verlaufen. Die Richtungen der Riffelungen dagegen verlaufen jeweils schräg zur Zylinderachse und schließen bei benachbarten Lamellen miteinander einen spitzen Winkel ein.

Bezüglich der Anströmrichtung des beschriebenen Einbauelementes bestehen verschiedene Möglichkeiten. Zweckmäßig wird die Anströmrichtung parallel zu den Ebenen der Lamellen gewählt, d.h. es kann entweder in Richtung der Stirnflächen des zylindrischen Einbauelementes oder in der Richtung auf die Mantelfläche zu angeströmt werden, die der Richtung der Lamellen entspricht.

Bei dem dargestellten Ausführungsbeispiel kann also beispielsweise das Medium durch den Zuflußstutzen 7 eintretend von unten gegen den Ventilkegel 3 anströmen, wobei es in den unten offenen Ansatz 10 eintritt und somit das Einbauelement 9 von der unteren Stirnfläche her angeströmt wird.

Wie Fig. 2 zu entnehmen, ist in der Mantelfläche des Ansatzes 10 eine Durchtrittsöffnung 11 vorgesehen, durch die beim Anheben des Ventilkegels 3 das Medium austritt. Die Form dieser Durchtrittsöffnung ist so gewählt, daß sie sich aus einem sich in Umfangsrichtung des Ansatzes 10 über einen bestimmten Winkelbereich erstreckenden Schlitz 11.1 und einer sich an diesen Schlitz zur Seite des Ventilkegels 3 hin anschließenden und sich in dieser Richtung verjüngenden Öffnung 11.2 zusammensetzt. Die sich verjüngende Öffnung 11.2 hat dabei eine Kontur, die im wesentlichen einer Glockenkurve entspricht. Diese besondere Ausbildung der Durchtrittsöffnung 11 hat den Zweck, eine lineare Kennlinie für das in Fig. 1 dargestellte Ventil zu erreichen. Es hat sich nämlich herausgestellt, daß das beschriebene Einbauelement eine Durchtrittskennlinie besitzt, die bei zunehmender Öffnung nach oben abflachend gekrümmt verläuft. Die genaue Form der Glockenkurve des Öffnungsteils 11.2 wird nun so berechnet, daß die Gesamtöffnung 11 für sich allein eine Kennlinie erzeugt, die entgegengesetzt gekrümmt ist, wie die Kennlinie des Einbauelementes 9. Wie unmittelbar an Fig. 2 abzulesen, erweitert sich der Durchtrittsquerschnitt der Durchtrittsöffnung 11 beim Öffnen des Ventils stärker als linear. Durch die Überlagerung der beiden Kennlinien des Einbauelementes 9 und der Durchtrittsöffnung 11 wird insgesamt eine lineare Kennlinie erreicht.

Selbstverständlich kann dieser Ausgleich der Kennlinien auch durch andere Öffnungsformen im Mantel des Ansatzes 10 erreicht werden.

So können beispielsweise auch mehrere in der Mantelfläche verteilte Durchtrittsöffnungen, beispielsweise Bohrungen, vorhanden sein, deren Dichte und/oder Durchmesser in Richtung auf den Ventilkegel 3 abnimmt. Diese Abnahme kann wiederum so eingestellt sein, daß sich ein Ausgleich der Durchtrittskennlinien und somit insgesamt eine lineare Kennlinie ergibt.

Selbstverständlich ist bei dem in Fig. 1 und 2 dargestellten Hubventil die Durchströmungsrichtung nicht vorgeschrieben. Es kann also auch der Stutzen 8 als Zuflußstutzen dienen, wobei das Medium durch die Durchtrittsöffnung 11 in das Einbauelement 9 eintritt und nach unten zum Stutzen 7 hin austritt.

Durch die Vielzahl der sich innerhalb des Einbauelementes 9 bildenden Teilströme des Mediums, die sich immer wieder kreuzen, erfolgt eine starke Energieumwandlung und eine entsprechende Geräuschminderung.

Selbstverständlich ist das beschriebene Einbauelement auch bei Hubventilen anderer Bauart verwendbar, beispielsweise kann es auch als Außenkegel geformt sein.

Besonders vorteilhaft ist, daß ein konventionelles Hubventil der Bauart nach Fig. 1 ohne geräuschdämpfendes Element umgerüstet werden kann, indem beispielsweise ein Ventilkegel, wie er in Fig. 2 dargestellt ist, nachträglich eingebaut wird.

Die Länge und der Durchmesser des Einbauelementes 9 richten sich nach den Platzverhältnissen und der erstrebten Geräuschminderung. Es hat sich gezeigt, daß ein Verhältnis von Länge zum Durchmesser bis max. 2 ausreichend ist.

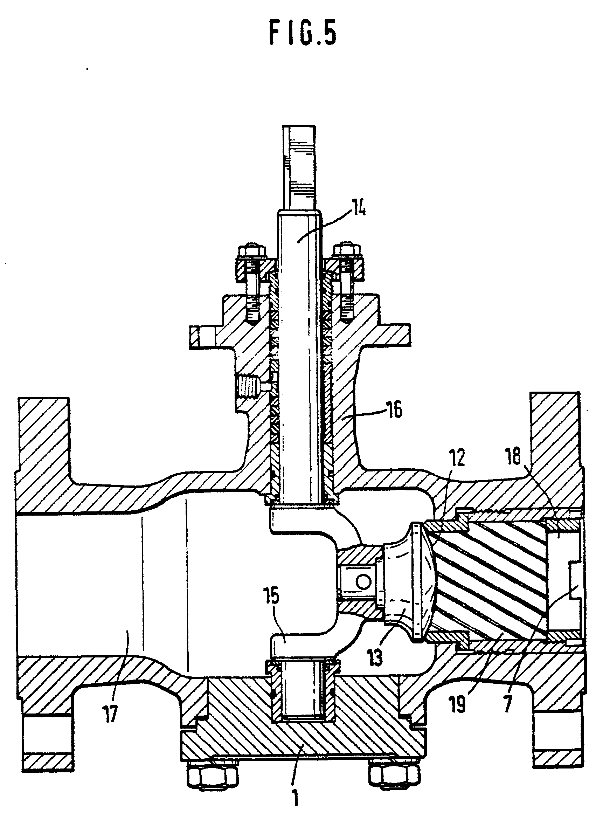

In Fig. 5 ist ein Drehkegelventil dargestellt, mit einem Gehäuse 1, einem Zuflußstutzen 17 und einem Abflußstutzen 18 und einem im Gehäuse angeordneten Drehkegel 13, der über ein Verbindungselement 15 mit der über eine Durchführung 16 ins Gehäuse hineingeführten drehbaren Spindel 14 verbunden ist.

Dem Drehkegel 13 gegenüberliegend ist ein sich über den ganzen Durchtrittsquerschnitt erstreckendes Einbauelement 19 angeordnet, das ebenfalls, wie das weiter oben beschriebene Einbauelement 9, zylindrische Form besitzt und in der gleichen Weise, wie anhand von Fig. 3 und 4 beschrieben, aus nebeneinanderliegenden, mit einer Riffelung versehenen Lamellen aufgebaut ist. Die Lamellen sind ebenfalls parallel zur Richtung Z der Zylinderachse angeordnet und die Riffelungen verlaufen jeweils schräg zu dieser Zylinderachse, wobei sich in der bereits beschriebenen Weise die Riffelungen von einander benachbarten Lamellen schneiden. Bei dem Einbauelement 19 verläuft die Durchströmungsrichtung von einer Stirnfläche zur anderen, also parallel zur Zylinderachse Z. Die dem Ventilkegel 13 zugewandte Stirnfläche des Einbauelementes 19 ist der sphärischen Form der Dichtungsfläche des Ventilkegels 13 angepaßt und liegt dichtend an der Dichtungsfläche des Ventilkegels 13 an. Damit wird erreicht, daß der Ventilsitz 12 durch die konkav sphärisch gekrümmte Stirnfläche des Einbauelementes 19 gebildet wird. Beim Öffnen des Ventilkegels 13 durch verschwenken wird eine sich zunehmend vergrößernde Einströmfläche am Einbauelement 19 freigegeben. Durch das direkte Einströmen des Mediums am Ventilsitz in das Einbauelement 19 wird ein besonders guter geräuschmindernder Effekt erreicht. Es hat sich weiterhin herausgestellt, daß bei dem Drehkegelventil mit der besonderen Ausbildung und Anordnung des Einbauelementes 19 eine Kennlinie erzielt wird, die die natürliche Kennlinie eines Drehkegelventils in der Weise beeinflußt, daß sie mindestens im weiteren Öffnungsbereich linearer wird.

Selbstverständlich kann auch bei dem in Fig. 5 dargestellten Ventil die Durchströmungsrichtung gewechselt werden.

Das Ventil kann auch mit einem weichdichtenden Ventilkegel versehen sein, was beispielsweise durch Anordnung eines nicht dargestellten O-Ringes in der Dichtfläche des Ventilkegels 13 erreicht werden kann.

## Patentansprüche

1. Geräuscharmes Stellventil mit einem Gehäuse (1), in dem ein gegenüber einem Ventilsitz (2, 2', 12) bewegbarer, den Durchtrittsweg des Mediums sperrender oder öffnender Ventilkegel (3, 3', 13) angeordnet ist und das einen Zuflußstutzen und einen Abflußstutzen besitzt und bei dem innerhalb des Gehäuses im Durchtrittsweg des Mediums ein geräuschdämpfendes Element (9, 19) angeordnet ist, wobei innerhalb dieses Elementes (9, 19) der Durchtrittsweg des Mediums in eine Veilzahl von Teilwegen aufgeteilt ist und die Durchtrittsquerschnitte der Teilwege klein gegenüber dem Durchtrittsquerschnitt des Ventils sind, dadurch gekennzeichnet, daß als geräuschdämpfendes Element ein an sich bekanntes Einbauelement (9, 19) dient, bei dem über den gesamten Durchtrittsquerschnitt parallel zueinander und parallel zur Anströmrichtung stehende, einander berührende Lamellen (9.1, 9.2, 9.3) angeordnet sind, die eine Riffelung aufweisen, wobei die Richtungen der Riffelungen schräg zur Anströmrichtung verlaufen und sich die Richtungen der Riffelungen von je zwei benachbarten Lamellen (9.1-9.2, 9.2-9.3) schneiden.

2. Stellventil nach Anspruch 1, dadurch gekennzeichnet, daß das Verhältnis von Länge zum Durchmesser des Einbauelementes (9, 19) im Bereich bis maximal 2 liegt.

3. Stellventil nach Anspruch 1 oder 2, dadurch gekennzeichnet, daß es als Hubventil (Fig. 1) ausgebildet ist und das Einbauelement (9) im oder am Ventilkegel (3, 3') so angeordnet ist, daß beim Abheben des Ventilkegels (3, 3') das Medium ausschließlich durch das Einbauelement (9) strömt.

4. Stellventil nach Anspruch 3, dadurch gekennzeichnet, daß der Ventilkegel (3, 3') einen sich in Schließrichtung erstreckenden, durch den Ventilsitz (2, 2') dichtend hindurchgeführten hohlzylindrischen, am freien Ende offenen Ansatz (10, auf weist, in dem das Einbauelement (9) angeordnet ist und in der Mantelfläche des Ansatzes (10) mindestens eine Durchtrittsöffnung (11) für das Medium angeordnet ist.

5. Stellventil nach Anspruch 4, dadurch gekennzeichnet, daß die Durchtrittsöffnung (11) sich aus einem sich in Umfangsrichtung über einen vorgegebenen Winkelbereich erstreckenden Schlitz (11.1) und einer sich an den Schlitz in Öffnungsrichtung anschließenden und in dieser Richtung verjüngenden Öffnung (11.2) zusammensetzt, wobei die Kontur der sich verjüngenden Öffnung im wesentlichen die Form einer Glockenkurve besitzt.

6. Stellventil nach Anspruch 4, dadurch gekennzeichnet, daß in der Mantelfläche über den Umfang verteilt mehrere Durchtrittsöffnungen angeordnet sind, wobei sich die Dichte und/oder der Querschnitt dieser Durchtrittsöffnungen in Öffnungsrichtung des Ventilkegels (3) verkleinern.

7. Stellventil nach einem der Ansprüche 1 oder 2, dadurch gekennzeichnet, daß es als Drehkegelventil (Fig. 5) ausgebildet ist und das Einbauelement (19) dem Ventilkegel (13) gegenüberliegend mit dem Gehäuse (1) verbunden im Durchtrittsweg des Mediums angeordnet ist, wobei seine dem Ventilkegel (13) zugewandte offene Stirnfläche als Ventilsitz (12) ausgebildet und der Form der an ihr anliegenden Dichtfläche des Ventilkegels (13) angepaßt ist.

## Claims

1. Low-noise regulating valve with a housing (1), in which is arranged a valve cone (3, 3', 13) movable relative to a valve seat (2, 2', 12) and closing or opening the throughflow path of the medium and which possesses an inflow connection and a flow-off connection, and in which a silencing element (9, 19) is arranged within the housing in the throughflow path of the medium, within this element (9, 19) the throughflow path of the medium being divided into a plurality of part paths, and the throughflow cross-sections of the part paths being small in relation to the throughflow cross-section of the valve, characterized in that the silencing element used is an installation element (9, 19) known per se, in which are arranged mutually touching lamellae (9.1, 9.2, 9.3) which are parallel to one another over the entire throughflow cross-section and are parallel to the onflow direction and which have a corrugation, the directions of the corrugations being oblique relative to the onflow direction, and the directions of the corrugations of every two adjacent lamellae (9.1–9.2, 9.2–9.3) intersecting.

2. Regulating valve according to Claim 1, characterized in that the ratio of length to diameter of the installation element (9, 19) is in the range up to a maximum of 2.

3. Regulating valve according to Claim 1 or 2, characterized in that it is designed as a lifting valve (Figure 1), and the installation element (9) is arranged in or on the valve cone (3. 3'), so that when the valve cone (3, 3') is lifted off the medium flows solely through the installation element (9).

4. Regulating valve according to Claim 3. characterized in that the valve cone (3. 3') has a hollow cylindrical extension (10) open at the free end, which extends in the closing direction and is guided sealingly through the valve seat (2, 2') and in which the installation element (9) is arranged, and at least one throughflow orifice (11) for the medium is provided in the outer cylindrical surface of the extension (10).

5. Regulating valve according to Claim 4. characterized in that the throughflow orifice (11) is composed of a slit (11.1) extending over a predetermined angular sector in the circumferential direction and of an orifice (11.2) adjoining the slit in the opening direction and tapering in this direction, the contour of the tapering orifice having essentially the form of a bell-shaped curve.

6. Regulating valve according to Claim 4, characterized in that several throughflow orifices distributed over the circumference are arranged in the outer cylindrical surface, the density and/or cross-section of these throughflow orifices decreasing in the opening direction of the valve cone (3).

7. Regulating valve according to one of Claims 1 or 2, characterized in that it is designed as a rotary cone valve (Figure 5), and the installation element (19), located opposite the valve cone (13) and connected to the housing (1), is arranged in the throughflow path of the medium, its open end face confronting the valve cone (13) being designed as a valve seat (12) and being matched to the form of the sealing surface of the valve cone (13) resting against it.

**Revendications**

1. Soupape de réglage silencieuse équipée d'un carter (1) à l'intérieur duquel est disposé, faisant face à un siège de soupape (2, 2', 12) un clapet conique (3, 3', 13) mobile, ouvrant ou fermant le passage du fluide et qui possède un raccord d'arrivée et un raccord de départ et sur laquelle, à l'intérieur du carter, dans le passage du fluide est disposé un élément insonorisant (9, 19), à l'intérieur dudit élément (9, 19) le passage du fluide étant divisé en une pluralité de passages partiels et les sections transversales de ces passages partiels étant réduites par rapport à la section transversale de passage de la soupape, caractérisée par le fait qu'un élément (9, 19) déjà connu sert d'élément insonorisant dans lequel sont disposées des lamelles (9.1, 9.2, 9.3) en contact mutuel et placées sur l'ensemble de la section de passage parallèlement les unes aux autres et parallèlement à la direction d'arrivée du flux. présentant des nervures dont les directions s'étendent obliquement par rapport à la direction d'arrivée du flux et les directions des nervures de deux lamelles adjacentes (9.1–9.2, 9.2–9.3) se coupant respectivement.

2. Soupape de réglage selon la revendication 1, caractérisée par le fait que le rapport entre la longueur et le diamètre de l'élément incorporable (9, 19) est au maximum égal à 2.

3. Soupape de réglage selon la revendication 1 ou 2, caractérisée par le fait qu'elle est réalisée sous la forme d'une soupape verticale (figure 1) et par le fait que l'élément incorporable (9) est disposé à l'intérieur ou sur le clapet conique (3. 3') de telle sorte qu'en soulevant le clapet (3. 3') le fluide passe exclusivement à travers l'élément incorporable (9).

4. Soupape de réglage selon la revendication 3, caractérisée par le fait que le clapet conique (3. 3') présente une butée (10) cylindrique creuse. ouverte sur son extrémité libre et passant de manière étanche à travers le siège de soupape (2. 2') à l'intérieur de laquelle est disposé l'élément incorporé (9) et par le fait que dans la surface extérieure de la butée (10) est pratiqué au moins un orifice de passage (11) pour le fluide.

5. Soupape de réglage selon la revendication 4. caractérisée par le fait que l'orifice de passage (11) se compose d'une fente (11.1) s'étendant sur une zone angulaire prédéterminée en direction du pourtour et d'un orifice (11.2) faisant suite à ladite fente (11.1) dans le sens de l'ouverture et se rétrécissant dans cette direction, le contour de l'orifice qui se rétrécit ayant sensiblement la forme d'une cloche.

6. Soupape de réglage selon la revendication 4, caractérisée par le fait que dans la surface extérieure répartis sur le pourtour sont pratiqués plusieurs orifices de passage, l'épaisseur et/ou le diamètre desdits orifices de passage se rétrécissant dans le sens d'ouverture du clapet conique (3).

7. Soupape de réglage selon la revendication 1 ou 2, caractérisée par le fait qu'elle est réalisée sous la forme d'une soupape à trois clapets coniques (figure 5) et que l'élément incorporé (19), faisant face au clapet conique (13), est disposé en liaison avec le carter 1 dans le passage du fluide, sa surface frontale ouverte orientée vers le clapet conique (13) étant réalisée sous la forme d'un siège de soupape (12) et ajustée à la forme de la surface d'étanchéité du clapet conique (13) appliquée sur elle.

EP 0 216 992 B1

# FIG.1

FIG.2

# FIG. 3

9.1

9.2

9.3

FIG.4

9.2

9.3

EP 0 216 992 B1

# FIG.5